# EUROPEAN PATENT APPLICATION

(11) **EP 4 375 116 A1**
(43) Date of publication of application: **29.05.2024**
(21) Application number: 23206509.4
(22) Date of filing: 27.10.2023
(51) Int. Cl.: B60L 3/00, B60L 3/12, B60L 58/26, H01M 10/613, H01M 10/625, H01M 10/633, B60L 58/16

(54) **SECONDARY BATTERY SYSTEM OF VEHICLE**

(30) Priority: 24.11.2022 JP 2022187706
(71) Applicant: TOYOTA JIDOSHA KABUSHIKI KAISHA, Toyota-shi, Aichi-ken, 471-8571 (JP)
(72) Inventor: TAKASU, Junta, Aichi-ken, 471-8571 (JP); NAKAYAMA, Hiroyuki, Aichi-ken, 471-8571 (JP)
(74) Representative: D Young & Co LLP

(57) **Abstract**

A secondary battery system of a vehicle includes a battery (21) in which a function is maintained by a differential pressure between an internal pressure and an external atmospheric pressure, and a CPU (201) that controls a temperature of the battery based on information related to an average of external atmospheric pressures of the battery based on a traveling history of the vehicle, and information related to a present external atmospheric pressure of the battery based on a present position of the vehicle.

## Description

### CROSS REFERENCE TO RELATED APPLICATIONS

This nonprovisional application is based on Japanese Patent Application No. 2022-187706 filed on November 24, 2022 with the Japan Patent Office, the entire contents of which are hereby incorporated by reference.

### BACKGROUND

### Field

The present disclosure relates to a secondary battery system of a vehicle.

### Description of the Background Art

Japanese Patent Laying-Open No. 2017-168439 describes a battery pack that has a stacked body in which unit cells are stacked. In this battery pack, a lid member is configured so as to deform in a state of maintaining a seal in the case where an internal pressure of a cell case is lower than atmospheric pressure, to abut against one surface of the stacked body, and to apply a pressure based on a differential pressure between atmospheric pressure and the internal pressure of the cell case to the abutting surface.

### SUMMARY

An internal pressure of a battery increases due to deterioration of the battery over time. In the case where the battery moves to an environment with a high elevation, an external atmospheric pressure of the battery decreases.

As a result of this, a difference between the external atmospheric pressure of the battery and the internal pressure of the battery may become smaller. Or, there may be cases where the internal pressure of the battery becomes larger than the external atmospheric pressure of the battery. As a result of this, a space inside the battery may no longer be maintained, due to a pressing force to a cell.

Therefore, the objective of the present disclosure is to provide a secondary battery system of a vehicle that can maintain an internal/external pressure difference of a battery.
(1) A secondary battery system of a vehicle of the present disclosure includes a battery in which a function is maintained by a differential pressure between an internal pressure and an external atmospheric pressure, and a processor that controls a temperature of the battery, based on information related to an average of external atmospheric pressures of the battery based on a traveling history of the vehicle, and information related to a present external atmospheric pressure of the battery based on a present position of the vehicle.

According to such a configuration, an adjustment can be performed so as to maintain an internal/external pressure difference of the battery, by having the temperature of the battery controlled, based on an average of external atmospheric pressures and a present value of the battery, even under an environment where an internal/external pressure difference of the battery changes.

(2) The secondary battery system of a vehicle includes a memory that stores information determining a correspondence relationship between information related to an average of external atmospheric pressures of the battery based on a traveling history of the vehicle and information related to a present external atmospheric pressure of the battery based on a present position of the vehicle, and a warranty time of the battery. The processor acquires information related to an average of external atmospheric pressures of the battery, information related to a present external atmospheric pressure of the battery, and a usage time of the battery. The processor specifies the warranty time of the battery corresponding to the acquired information related to an average of external atmospheric pressures of the battery and information related to a present external atmospheric pressure of the battery by referring to the information determining the correspondence relationship, and controls the temperature of the battery based on the usage time of the battery and the warranty time of the battery.

According to such a configuration, an adjustment can be performed so as to maintain an internal/external pressure difference of the battery, by specifying a warranty time of the battery, and controlling the temperature of the battery, based on the usage time of the battery and the warranty time of the battery, even under an environment where an internal/external pressure difference of the battery changes.

(3) In a case where the usage time of the battery exceeds the warranty time of battery, the processor lowers the temperature of the battery.

The internal pressure of the battery can be lowered, by lowering the temperature of the battery.

(4) In a case where the usage time of the battery exceeds the warranty time of the battery, the processor lowers the temperature of the battery by only a temperature corresponding to a difference between the usage time of the battery and the warranty time of the battery.

In the case where a difference between the usage time of the battery and the warranty time of the battery becomes large, the temperature of the battery can be significantly lowered.

(5) In a case where the usage time of the battery exceeds the warranty time of the battery and the temperature of the battery is a predetermined temperature or more, the processor lowers the temperature of the battery.

Temperature control of the battery can be limited only when necessary, in the case where the temperature of the battery is less than a predetermined temperature, even if the usage time of the battery exceeds the warranty time of the battery, and in the case where there is no influence on an internal/external pressure difference of the battery, without lowering the temperature of the battery.

(6) In a case where the usage time of the battery exceeds the warranty time of the battery and the temperature of the battery is a predetermined temperature or more, the processor lowers the temperature of the battery by only a temperature corresponding to a difference between the usage time of the battery and the warranty time of the battery.

In the case where a difference between the usage time of the battery and the warranty time of the battery becomes large, the temperature of the battery can be significantly lowered.

(7) The information determining the correspondence relationship is determined such that, when an average of external atmospheric pressures of the battery is identical, the warranty time of the battery becomes shorter as a present external atmospheric pressure of the battery increases, and is determined such that, when a present external atmospheric pressure of the battery is identical, the warranty time of the battery becomes longer as an average of external atmospheric pressures of the battery increases.

Since information determining this correspondence relationship appropriately represents the features of the battery, the accuracy of temperature control of the battery can be increased.

(8) The secondary battery system of the vehicle includes a memory that stores information determining a correspondence relationship between information related to an average of external atmospheric pressures of the battery based on a traveling history of the vehicle and information related to a present external atmospheric pressure of the battery based on a present position of the vehicle, and a maximum allowable temperature of the battery as a condition where the battery can be used only for a determined warranty time. The processor acquires information related to an average of external atmospheric pressures of the battery, information related to a present external atmospheric pressure of the battery, and a present temperature of the battery. The processor specifies a maximum allowable temperature of the battery corresponding to the acquired information related to an average of external atmospheric pressures of the battery and information related to a present external atmospheric pressure of the battery by referring to the information determining the correspondence relationship, and controls the temperature of the battery based on the present temperature of the battery and the maximum allowable temperature of the battery.

According to such a configuration, an adjustment can be performed so as to maintain an internal/external pressure difference of the battery, by specifying a maximum allowable temperature of the battery, and controlling the temperature of the battery, based on the present temperature of the battery and the maximum allowable temperature of the battery, even under an environment where an internal/external pressure difference of the battery changes.

(9) In a case where the present temperature of the battery exceeds the maximum allowable temperature of the battery, the processor lowers the temperature of the battery to the maximum allowable temperature of the battery or less.

The internal pressure of the battery can be lowered, by lowering the temperature of the battery to the maximum allowable temperature or less.

(10) The information determining the correspondence relationship is determined such that, when an average of external atmospheric pressures of the battery is identical, the maximum allowable temperature of the battery becomes lower as a present external atmospheric pressure of the battery increases, and is determined such that, when a present external atmospheric pressure of the battery is identical, the maximum allowable temperature of the battery becomes higher as an average of external atmospheric pressures of the battery increases.

Since information determining this correspondence relationship appropriately represents the features of the battery, the accuracy of temperature control of the battery can be increased.

(11) The secondary battery system of the vehicle further includes a cooling mechanism that cools the battery. The processor controls the temperature of the battery by controlling the cooling mechanism.

According to this, the temperature of the battery can be controlled, without providing an influence on traveling of the vehicle.

(12) The processor controls the temperature of the battery by controlling a current input to the battery or a current output from the battery.

In the case where the temperature of the battery cannot be controlled or the like, by only the cooling mechanism, the temperature of the battery can be controlled, by controlling an input/output current to/from the battery.

(13) The battery has a structure in which a space inside the battery is held by deforming in accordance with a differential pressure between an internal pressure and an external atmospheric pressure.

The space inside the battery can be held, even under an environment where an internal/external pressure difference of the battery changes.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a figure schematically showing an overall configuration of a charging system relating to Embodiment 1.
Fig. 2 is a block diagram schematically showing configurations of a vehicle 1 and a charger 5.
Fig. 3 is a perspective view schematically showing an example of a battery 21.
Fig. 4 is a cross-sectional view at an IV-IV line in Fig. 3.
Fig. 5 is a figure representing a warranty time D (i, j) of battery 21 corresponding to an average altitude EH of the vehicle and a maximum altitude XH of the vehicle when a temperature of battery 21 is a determined temperature α.
Fig. 6 is a figure representing an example of a warranty time map of battery 21.
Fig. 7 is a flow chart representing procedures of battery control of secondary battery system 2 of Embodiment 1.
Fig. 8 is a flow chart representing procedures of battery control of secondary battery system 2 of Modified Example 1 of Embodiment 1.
Fig. 9 is a flow chart representing procedures of battery control of secondary battery system 2 of Modified Example 2 of Embodiment 1.
Fig. 10 is a flow chart representing procedures of battery control of secondary battery system 2 of Modified Example 3 of Embodiment 1.
Fig. 11 is a figure representing an example of a maximum allowable temperature map of battery 21.
Fig. 12 is a flow chart representing procedures of battery control of secondary battery system 2 of Embodiment 2.

### DESCRIPTION OF THE PREFERRED EMBODIMENTS

Hereinafter, embodiments will be described in detail with reference to the figures. Note that, the same reference numerals are attached to same or corresponding portions within the figures, and descriptions of these portions are not repeated.

### [First Embodiment]

### <Overall configuration of charging system>

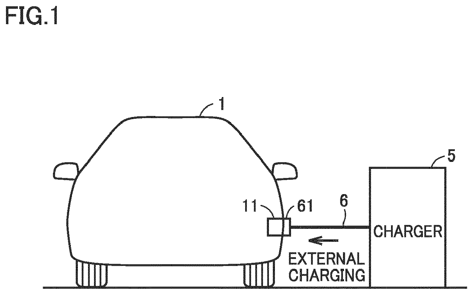

Fig. 1 is a figure schematically showing an overall configuration of a charging system relating to Embodiment 1. With reference to Fig. 1, the charging system includes a vehicle 1 and a charger 5. Fig. 1 shows that vehicle 1 and charger 5 are electrically connected by a charging cable 6, and a condition at the time of an external charging control for supplying power from charger 5 to vehicle 1.

Vehicle 1 is, for example, a Battery Electric Vehicle. However, vehicle 1 may be, for example, a Plug-in Hybrid Electric Vehicle, if a vehicle configured to enable external charging. Charger 5 may be a dedicated charger provided in a user's home or the like, or may be a charger provided in a public power charging station (also called a charging station).

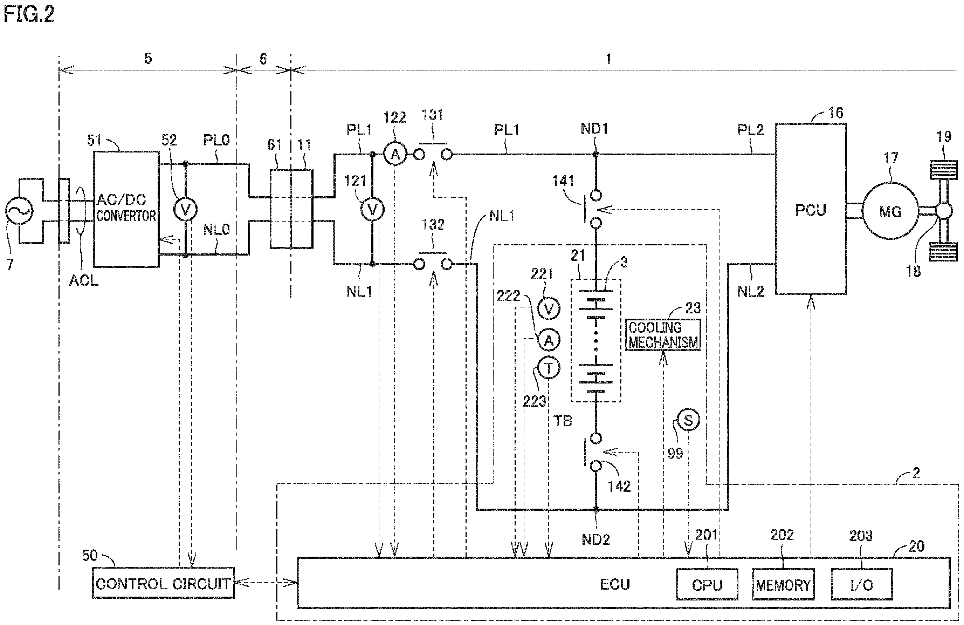

Fig. 2 is a block diagram schematically showing configurations of vehicle 1 and charger 5. Charger 5 is a Direct Current (DC) charger, and converts supply power (alternative current power) from a system power supply 7 into charging power (direct current power) of a battery 21 mounted in vehicle 1. Charger 5 includes a power line ACL, an AC/DC convertor 51, a voltage sensor 52, power supply lines PL0 and NL0, and a control circuit 50.

Power line ACL is electrically connected to system power supply 7. Power line ACL transfers alternative current power from system power supply 7 to AC/DC convertor 51.

AC/DC convertor 51 converts alternative current power on power line ACL into direct current power for charging battery 21 mounted in vehicle 1. Power conversion by AC/DC convertor 51 may be executed by combining AC/DC conversion for power-factor improvement and DC/DC conversion for voltage level adjustment. Direct current power output from AC/DC convertor 51 is supplied by power supply line PL0 on a positive electrode side and power supply line NL0 on a negative electrode side.

Voltage sensor 52 is electrically connected between power supply line PL0 and power supply line NL0. Voltage sensor 52 detects a voltage between power supply line PL0 and power supply line NL0, and outputs a detection result thereof to control circuit 50.

Control circuit 50 may be configured to include a CPU, a memory, and an input/output port, which are not illustrated. Control circuit 50 controls a power conversion operation by AC/DC convertor 51, based on voltages detected by voltage sensor 52, signals from vehicle 1, and maps and programs stored in the memory.

Vehicle 1 includes an inlet 11, charging lines PL1 and NL1, a voltage sensor 121, a current sensor 122, charging relays 131 and 132, System Main Relays (SMRs) 141 and 142, power lines PL2 and NL2, a Power Control Unit (PCU) 16, a motor generator 17, a power transmission gear 18, a driving wheel 19, and a secondary battery system 2. Secondary battery system 2 includes battery 21, a voltage sensor 221, a current sensor 222, a temperature sensor 223, a sensor 99, a cooling mechanism 23, and an Electronic Control Unit (ECU) 20.

Inlet (charging port) 11 is configured to enable a connector 61 of charging cable 6 to be inserted along with a mechanical coupling such as fitting. Along with the insertion of connector 61, an electrical connection between power supply line PL0 and a contact of inlet 11 on the positive electrode side is secured, and an electrical connection between power supply line NL0 and a contact of inlet 11 on the negative electrode side is secured. Moreover, by having inlet 11 and connector 61 connected by charging cable 6, it becomes possible for ECU 20 of vehicle 1 and control circuit 50 of charger 5 to mutually transmit and receive various types of information such as signals, instructions, messages, and data, by communication along with a communication standard of Controller Area Network (CAN) or the like.

Voltage sensor 121 is electrically connected between charging line PL1 and charging line NL1, on inlet 11 side from charging relays 131 and 132. Voltage sensor 121 detects a direct current voltage between charging line PL1 and charging line NL1, and outputs a detection result thereof to ECU 20. Current sensor 122 is provided on charging line PL1. Current sensor 122 detects a current flowing in charging line PL1, and outputs a detection result thereof to ECU 20. ECU 20 can calculate supply power (charging amount of battery 21) from charger 5, based on the detection results by voltage sensor 121 and current sensor 122.

Charging relay 131 is connected to charging line PL1, and charging relay 132 is connected to charging line NL1. Closing/opening of charging relays 131 and 132 is controlled in accordance with an instruction from ECU 20. When charging relays 131 and 132 are closed, and SMRs 141 and 142 are closed, it becomes a state that enables power transmission between inlet 11 and battery 21.

Battery 21 is a battery assembly configured to include a plurality of cells 3. Battery 21 supplies power for generating a driving force of vehicle 1. Battery 21 accumulates power generated by motor generator 17. Battery 21 has a function therein maintained by a differential pressure between an internal pressure and an external atmospheric pressure. For example, battery 21 may have a structure in which a space inside the battery is held, by deforming in accordance with a differential pressure between an internal pressure and an external atmospheric pressure. Battery 21 may be a laminate battery. Battery 21 may have an electrode assembly belly portion that is compressed to hold a state thereof, in accordance with a differential pressure between an internal pressure and an external atmospheric pressure.

The positive electrode of battery 21 is electrically connected to a node ND1 via SMR 141. Node ND1 is electrically connected to charging line PL1 and power line PL2. Similarly, the negative electrode of battery 21 is electrically connected to a node ND2 via SMR 142. Node ND2 is electrically connected to charging line NL1 and power line NL2. Closing/opening of SMRs 141 and 142 is controlled in accordance with an instruction from ECU 20.

Voltage sensor 221 detects a voltage of battery 21. Current sensor 222 detects a current input/output to/from battery 21. Temperature sensor 223 detects a temperature TB of battery 21. Each sensor outputs a detection result thereof to ECU 20. ECU 20 can estimate an SOC of battery 21, based on a detection result by voltage sensor 221 and/or current sensor 222.

Sensor 99 detects information related to an atmospheric pressure of a present position of the vehicle. Sensor 99 is an altitude sensor, such as a Global Positioning System (GPS) altimeter, an atmospheric pressure sensor or the like.

Cooling mechanism 23 cools battery 21 in accordance with a control by ECU 20. Cooling mechanism 23 is, for example, composed of a fan.

PCU 16 is electrically connected between power lines PL2 and NL2 and motor generator 17. PCU 16 is configured to include a convertor and an inverter (both not illustrated), and drives motor generator 17 in accordance with an instruction from ECU 20.

Motor generator 17 is an alternating current rotary electrical machine, for example, a permanent-magnet synchronous motor that includes rotors with permanent magnets embedded therein. An output torque of motor generator 17 is transmitted to driving wheel 19 through power transmission gear 18, and causes vehicle 1 to travel. Moreover, motor generator 17 can generate power by a rotational force of driving wheel 19, at the time of a braking operation of vehicle 1. Generated power by motor generator 17 is converted into charging power of battery 21 by PCU 16.

ECU 20, similar to control circuit 50, is configured to include a CPU 201, a memory 202 such as a Read Only Memory (ROM) and a Random Access Memory (RAM), and an input/output port 203. ECU 20 controls equipment such that vehicle 1 becomes a desired state, in accordance with signals from each of the sensors. Note that, ECU 20 may be configured by dividing into a plurality of ECUs for each function.

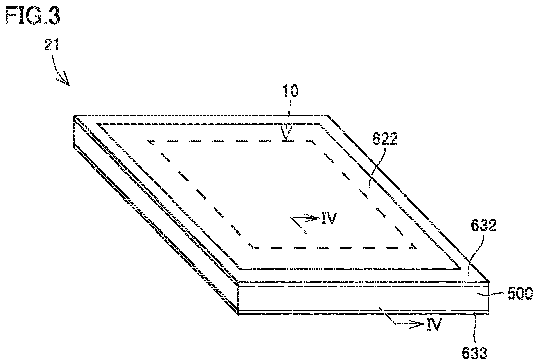

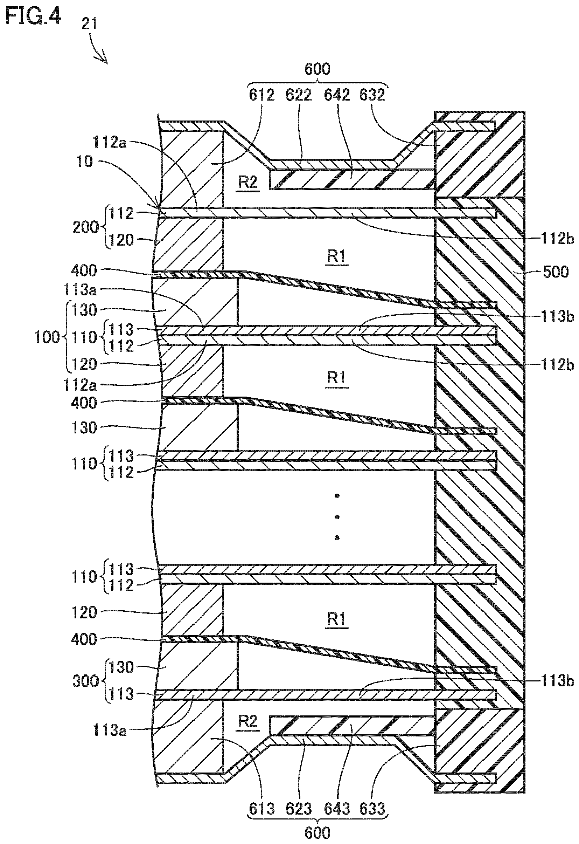

Fig. 3 is a perspective view schematically showing an example of battery 21. Fig. 4 is a cross-sectional view at an IV-IV line in Fig. 3.

Battery 21 includes an electrode laminate 10, a plurality of separators 400, a sealing portion 500, and a buffer region formation member 600.

Electrode laminate 10 has a plurality of bipolar electrodes 100, a positive terminal electrode 200, and a negative terminal electrode 300.

Plurality of bipolar electrodes 100 are mutually stacked. Each bipolar electrode 100 has a current collector 110, a positive electrode active material layer 120, and a negative electrode active material layer 130.

Current collector 110 is made of metal, and is, for example, formed in a rectangular shape. Current collector 110 has a positive electrode current collector foil 112 and a negative electrode current collector foil 113. Positive electrode current collector foil 112 is, for example, made of aluminum. Negative electrode current collector foil 113 is, for example, made of copper foil. Negative electrode current collector foil 113 is adhered to positive electrode current collector foil 112 by a conductive adhesive.

Positive electrode active material layer 120 is provided on one surface in current collector 110, namely, on the surface of positive electrode current collector foil 112. Negative electrode active material layer 130 is provided on the other surface in current collector 110, namely, on the surface of negative electrode current collector foil 113.

Plurality of bipolar electrodes 100 are stacked such that positive electrode active material layer 120 in one of bipolar electrodes 100, and negative electrode active material layer 130 in bipolar electrode 100 adjacent to one bipolar electrode 100, are facing each other.

Positive terminal electrode 200 is disposed on one side of plurality of bipolar electrodes 100 in a stacking direction. Positive terminal electrode 200 has positive electrode current collector foil 112, and positive electrode active material layer 120 provided on positive electrode current collector foil 112. The configuration of positive electrode current collector foil 112 and positive electrode active material layer 120 in positive terminal electrode 200 is the same as that in bipolar electrode 100.

Negative terminal electrode 300 is disposed on the other side of plurality of bipolar electrodes 100 in the stacking direction. Negative terminal electrode 300 has negative electrode current collector foil 113, and negative electrode active material layer 130 provided on negative electrode current collector foil 113. The configuration of negative electrode current collector foil 113 and negative electrode active material layer 130 in negative terminal electrode 300 is the same as that in bipolar electrode 100.

Positive electrode current collector foil 112 in each bipolar electrode 100 and positive electrode current collector foil 112 in positive terminal electrode 200 have a positive electrode coated portion 112a and a positive electrode uncoated portion 112b.

Positive electrode coated portion 112a is a part where positive electrode active material layer 120 is provided. Positive electrode uncoated portion 112b is a part where positive electrode active material layer 120 is not provided, namely, a part where positive electrode current collector foil 112 is exposed.

Negative electrode current collector foil 113 in each bipolar electrode 100 and negative electrode current collector foil 113 in negative terminal electrode 300 have a negative electrode coated portion 113a and a negative electrode uncoated portion 113b.

Negative electrode coated portion 113a is a part where negative electrode active material layer 130 is provided. Negative electrode uncoated portion 113b is a portion where negative electrode active material layer 130 is not provided, namely, a part where negative electrode current collector foil 113 is exposed. Negative electrode uncoated portion 113b faces positive electrode uncoated portion 112b in the stacking direction.

Each separator 400 is disposed between pairs electrodes 100, 200, and 300 mutually adjacent in the stacking direction. Specifically, each separator 400 is disposed between positive electrode active material layer 120 and negative electrode active material layer 130. Each separator 400 is made of an insulating material, and allows the permeation of ions. A polyolefin microporous film or the like is provided as each separator 400.

Sealing portion 500 is made of an insulating material (resin or the like). Sealing portion 500 seals between pairs of electrodes 100, 200, and 300 mutually adjacent in the stacking direction of electrode laminate 10. More specifically, sealing portion 500 seals a region R1, which is formed between positive electrode uncoated portion 112b and negative electrode uncoated portion 113b, in a state where pressure within region R1 is lower than atmospheric pressure. An electrolyte solution is sealed in region R1. Sealing portion 500 holds a peripheral edge portion of each current collector foil 112 and 113 and a peripheral edge portion of each separator 400. Sealing portion 500 has a function for preventing leakage of the electrolyte solution from region R1 and infiltration of moisture from the outside to region R1, and a function for securing a gap between positive electrode uncoated portion 112b and negative electrode uncoated portion 113b disposed so as to sandwich region R1. Region R1 has a function as a gas pocket for accommodating gas produced from each electrode 100, 200, and 300 at the time of charging and discharging.

Buffer region formation member 600 forms a buffer region R2 (refer to Fig. 2) sealed on the outside of electrode laminate 10 in the stacking direction. Buffer region formation member 600 forms buffer region R2 at a position overlapping region R1 in the stacking direction. Buffer region formation member 600 has a positive electrode side conductive member 612, a positive electrode side conductive film 622, a positive electrode side holding portion 632, a positive electrode side support portion 642, a negative electrode side conductive member 613, a negative electrode side conductive film 623, a negative electrode side holding portion 633, and a negative electrode side support portion 643.

Positive electrode side conductive member 612 is disposed so as to contact an outer surface of positive electrode coated portion 112a in positive terminal electrode 200. Positive electrode side conductive member 612 is formed in a flat plate shape. Positive electrode side conductive member 612 is made of aluminum, copper or the like.

Positive electrode side conductive film 622 covers positive electrode side conductive member 612. Positive electrode side conductive film 622 covers the entire region of an outer surface of positive electrode side conductive member 612. Positive electrode side conductive film 622 is made of aluminum or the like.

Positive electrode side holding portion 632 holds a peripheral edge portion of positive electrode side conductive film 622 so as to form buffer region R2 along with positive electrode uncoated portion 112b, positive electrode side conductive member 612, and positive electrode side conductive film 622 in positive terminal electrode 200. Positive electrode side holding portion 632 is made of an insulating material (resin or the like). Positive electrode side holding portion 632 is connected to an outer end surface of sealing portion 500 in the stacking direction. Positive electrode side holding portion 632 is made of a same material as sealing portion 500, and may be formed integrally with sealing portion 500.

The part prescribing buffer region R2 of positive electrode side conductive film 622 (the part between positive electrode side conductive member 612 and positive electrode side holding portion 632) deforms inwardly in the stacking direction in accordance with a differential pressure between atmospheric pressure and the pressure within region R2. Therefore, the size of region R2 is maintained. When atmospheric pressure decreases, or the pressure within region R2 decreases, the differential pressure reduces. As a result of this, the size of region R2 is no longer maintained.

Positive electrode side support portion 642 is disposed between positive electrode uncoated portion 112b and positive electrode side conductive film 622 in positive terminal electrode 200. Positive electrode side support portion 642 supports positive electrode side conductive film 622. Positive electrode side support portion 642 is made of an insulating material (resin or the like). Positive electrode side support portion 642 has a shape that extends from positive electrode side holding portion 632 toward positive electrode side conductive member 612. Positive electrode side support portion 642 is made of a same material as positive electrode side holding portion 632, and may be formed integrally with positive electrode side holding portion 632. Positive electrode side support portion 642 is set to a rigidity to the extent that can support positive electrode side conductive film 622 deformed inwardly in the stacking direction. Positive electrode side support portion 642 may contact positive electrode uncoated portion 112b in positive terminal electrode 200, or may be separated from contact positive electrode uncoated portion 112b.

Negative electrode side conductive member 613, negative electrode side conductive film 623, negative electrode side holding portion 633, and negative electrode side support portion 643 respectively have configurations corresponding to positive electrode side conductive member 612, positive electrode side conductive film 622, positive electrode side holding portion 632, and positive electrode side support portion 642. Accordingly, descriptions of negative electrode side conductive member 613, negative electrode side conductive film 623, negative electrode side holding portion 633, and negative electrode side support portion 643 are omitted.

Negative electrode side conductive member 613 is disposed so as to contact an outer surface of negative electrode coated portion 113a in negative terminal electrode 300.

Negative electrode side conductive film 623 covers negative electrode side conductive member 613.

Negative electrode side holding portion 633 holds a peripheral edge portion of negative electrode side conductive film 623 so as to form buffer region R2 along with negative electrode uncoated portion 113b, negative electrode side conductive member 613, and negative electrode side conductive film 623 in negative terminal electrode 300.

Negative electrode side support portion 643 is disposed between negative electrode uncoated portion 113b and negative electrode side conductive film 623 in negative terminal electrode 300. Negative electrode side support portion 643 supports negative electrode side conductive film 623.

Next, temperature control of battery 21 will be described.

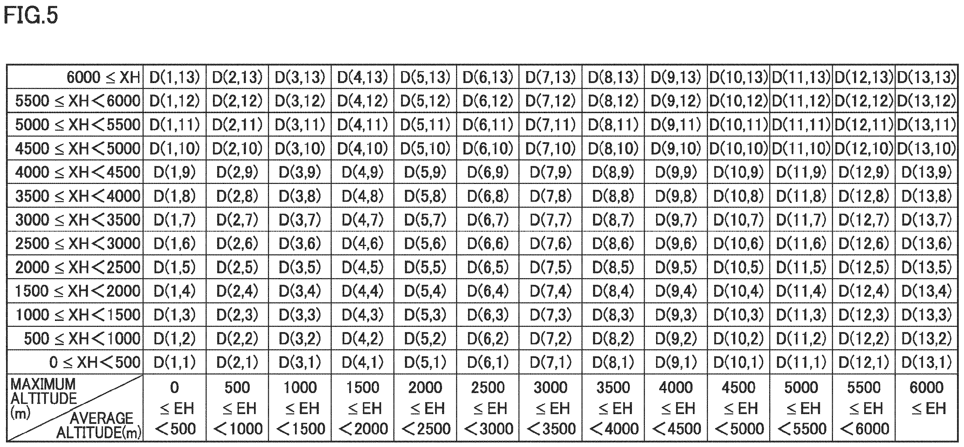

Fig. 5 is a figure representing a warranty time D (i, j) of battery 21 corresponding to an average altitude EH of the vehicle and a maximum altitude XH of the vehicle when the temperature of battery 21 is a determined temperature α.

At the time when the usage time of battery 21 reaches the warranty time of battery 21 shown in Fig. 5, and the temperature of battery 21 becomes determined temperature α, an internal pressure of battery 21 becomes an external pressure of battery 21 or more. Here, the inside of battery 21 is, specifically, region R2 shown in Fig. 4.

In Fig. 5, average altitude EH and maximum altitude XH are described in 500m units. At identical average altitude EH, the higher maximum altitude XH, the shorter warranty time D (i, j) of battery 21. At identical maximum altitude XH, the higher average altitude EH, the longer warranty time D (i, j) of battery 21.

The feature of Fig. 5 is a feature discovered by the inventors of the present application. CPU 201 controls the temperature of battery 21, by using this feature. In the present embodiment, CPU 201 control the temperature of battery 21, by replacing a maximum altitude (lowest pressure) of the vehicle with a present altitude (present pressure) of the vehicle. This is because temperature control of battery 21 is necessary, in the case where reaching the warranty time of the battery, even at an altitude lower than the maximum altitude of the vehicle.

Memory 202 stores a warranty time map of battery 21, information related to an average of external atmospheric pressures of battery 21, and a usage time of battery 21.

The warranty time map of battery 21 stores information determining a correspondence relationship between information related to an average of external atmospheric pressures of battery 21 based on a traveling history of the vehicle and information related to a present external atmospheric pressure of battery 21 based on a present position of the vehicle, and the warranty time of battery 21. The warranty time map of battery 21 is determined such that, when an average of external atmospheric pressures of battery 21 is identical, the warranty time of battery 21 becomes shorter as a present external atmospheric pressure of battery 21 increases, and is determined such that, when a present external atmospheric pressure of battery 21 is identical, the warranty time of the battery becomes longer as an average of external atmospheric pressures of battery 21 increases.

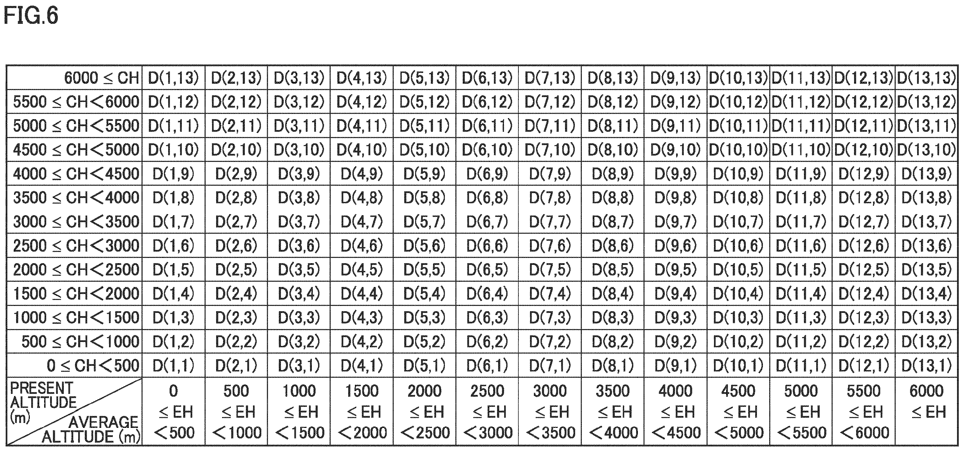

Fig. 6 is a figure representing an example of the warranty time map of battery 21.

In the example of Fig. 6, information related to an average of external atmospheric pressures of the battery based on a traveling history of the vehicle is average altitude EH of the vehicle based on a traveling history of the vehicle. Information related to a present external atmospheric pressure of the battery based on a present position of the vehicle is present altitude CH of the vehicle. The warranty time of battery 21 is a warranty time when the temperature of battery 21 is determined temperature α.

In Fig. 6, average altitude EH and present altitude CH are described in 500m units. At identical average altitude EH, the higher present altitude CH, the shorter warranty time D (i, j) of battery 21. At identical present altitude CH, the higher average altitude EH, the longer warranty time D (i, j) of battery 21.

CPU 201 controls the temperature of battery 21, based on information related to an average of external atmospheric pressures of battery 21 based on a traveling history of the vehicle (average altitude EH of the vehicle), and information related to a present external atmospheric pressure of battery 21 based on a present position of the vehicle (present altitude CH of the vehicle).

CPU 201 acquires information related to an average of external atmospheric pressures of battery 21 (average altitude EH of the vehicle) and the usage time of battery 21 from memory 202. CPU 201 acquires information related to a present external atmospheric pressure of battery 21 (present altitude CH of the vehicle) from sensor 99.

CPU 201 specifies a warranty time of battery 21 corresponding to the acquired information related to an average of external atmospheric pressures of the battery (average altitude EH of the vehicle) and information related to a present external atmospheric pressure of the battery (present altitude CH of the vehicle), by referring to the warranty time map of battery 21. CPU 201 controls the temperature of battery 21, based on the usage time of battery 21 and the warranty time of battery 21. In the case where the usage time of battery 21 exceeds the warranty time of battery 21, CPU 201 lowers the temperature of battery 21. Specifically, CPU 201 lowers the temperature of battery 21, by increasing the number of rotations of a fan within cooling mechanism 23. Or, CPU 201 lowers the temperature of battery 21, by decreasing the size of an input current to battery 21 or the size of an output current from battery 21. CPU 201 may lower the temperature of battery 21, by decreasing an upper limit value of an input current to battery 21 or an upper limit value of an output current from battery 21. CPU 201, at a normal time, may lower the temperature of battery 21, by increasing the number of rotations of the fan within cooling mechanism 23, and in the case where a prompt temperature control is necessary, may decrease the size of an input current to battery 21 or the size of an output current from battery 21, along with increasing the number of rotations of the fan within cooling mechanism 23.

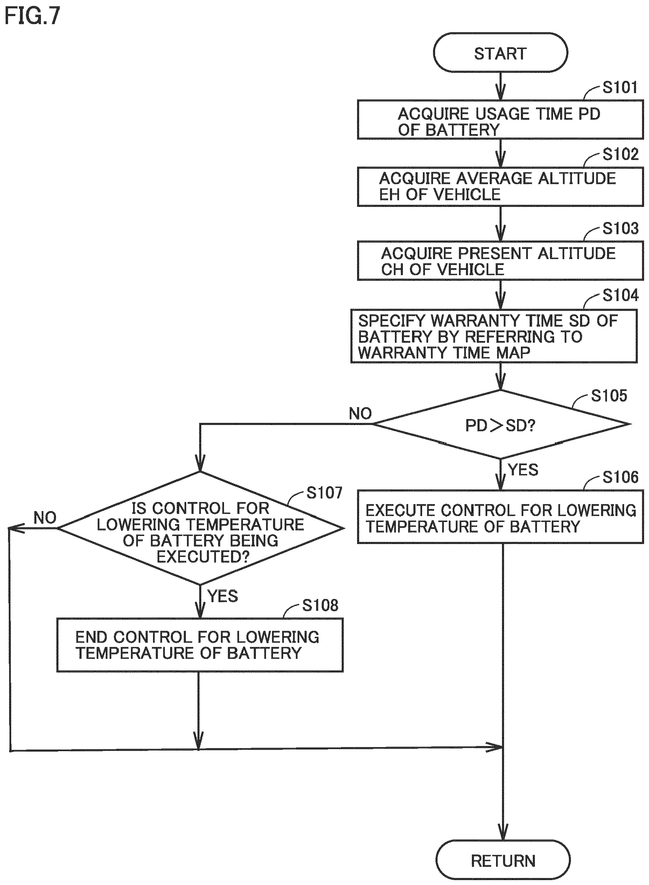

Fig. 7 is a flow chart representing procedures of battery control of secondary battery system 2 of Embodiment 1.

In step S101, CPU 201 acquires a usage time PD of battery 21 from memory 202.

In step S102, CPU 201 acquires average altitude EH in a traveling history of the vehicle from memory 202.

In step S103, CPU 201 acquires present altitude CH of the vehicle from sensor 99.

In step S104, CPU 201 specifies a warranty time SD of the battery corresponding to acquired average altitude EH of the vehicle and present altitude CH of the vehicle, by referring to the warranty time map shown in Fig. 6.

In step S105, in the case where usage time PD of battery 21 exceeds warranty time SD of battery 21, the process proceeds to step S106. In the case where usage time PD of battery 21 is warranty time SD of battery 21 or less, the process proceeds to step S107.

In step S106, CPU 201 executes a control for lowering the temperature of battery 21. For example, CPU 201 increases the number of rotations of the fan of cooling mechanism 23, or decreases the size of an input current to battery 21 or the size of an output current from battery 21. Afterwards, the process ends.

In step S107, in the case where a control for lowering the temperature of battery 21 is being executed, the process proceeds to step S108. In the case where a control for lowering the temperature of battery 21 is not being executed, the process ends.

In step S108, CPU 201 ends a control for lowering the temperature of battery 21. Afterwards, the process ends.

### [Modified Example 1 of Embodiment 1]

In the present modified example, in the case where the usage time of battery 21 exceeds the warranty time of battery 21, CPU 201 lowers the temperature of battery 21 by only a temperature corresponding to a difference between the usage time of battery 21 and the warranty time of battery 21. For example, the temperature to be lowered may become higher as a difference between the usage time of battery 21 and the warranty time of battery 21 increases.

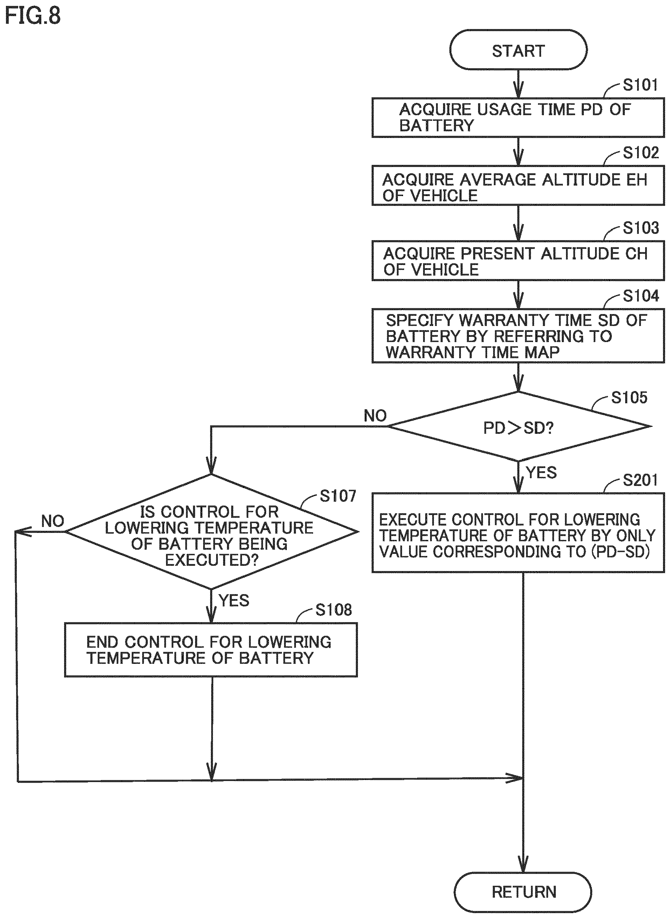

Fig. 8 is a flow chart representing procedures of battery control of secondary battery system 2 of Modified Example 1 of Embodiment 1. The flow chart of Fig. 8 differs from the flow chart of Fig. 7 in that the flow chart of Fig. 8 includes step S201, instead of step S106.

In step S201, CPU 201 executes a control for lowering the temperature of battery 21 by only a temperature corresponding to (PD-SD). For example, CPU 201 may increase the number of rotations of the fan of cooling mechanism 23 by only an amount corresponding to (PD-SD), or may decrease the upper limit value of a charging current of battery 21 by only an amount corresponding to (PD-SD).

### [Modified Example 2 of Embodiment 1]

In the present modified example, in the case where the usage time of battery 21 exceeds the warranty time of battery 21, and the temperature of battery 21 is a predetermined temperature or more, CPU 201 lowers the temperature of battery 21. Here, in the case where the map of Fig. 6 is used, the predetermined temperature can be set to a temperature of α or slightly lower than α.

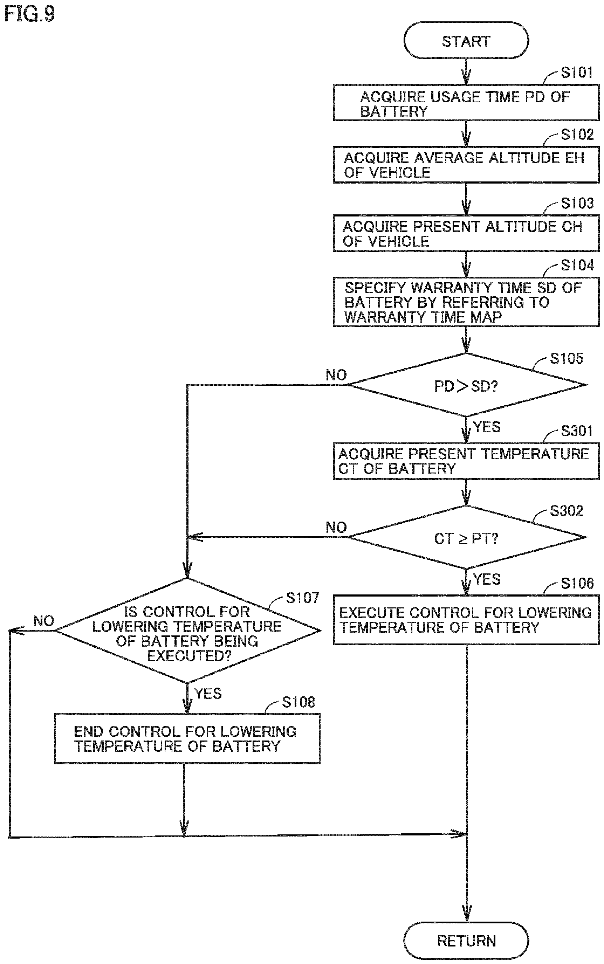

Fig. 9 is a flow chart representing procedures of battery control of secondary battery system 2 of Modified Example 2 of Embodiment 1. The flow chart of Fig. 9 differs from the flow chart of Fig. 7 in that the flow chart of Fig. 9 includes steps S301 and S302, between YES of step S105 and step S106.

In step S301, CPU 201 acquires a present temperature CT of battery 21 from temperature sensor 223.

In step S302, in the case where present temperature CT of battery 21 is a predetermined temperature PT or more, the process proceeds to step S106, and in the case where present temperature CT of battery 21 is predetermined temperature PT or less, the process proceeds to step S107.

### [Modified Example 3 of Embodiment 1]

In the present modified example, in the case where the usage time of battery 21 exceeds the warranty time of battery 21, and the temperature of battery 21 is a predetermined temperature or more, CPU 201 lowers the temperature of battery 21 by only a temperature corresponding to a difference between the usage time of battery 21 and the warranty time of battery 21.

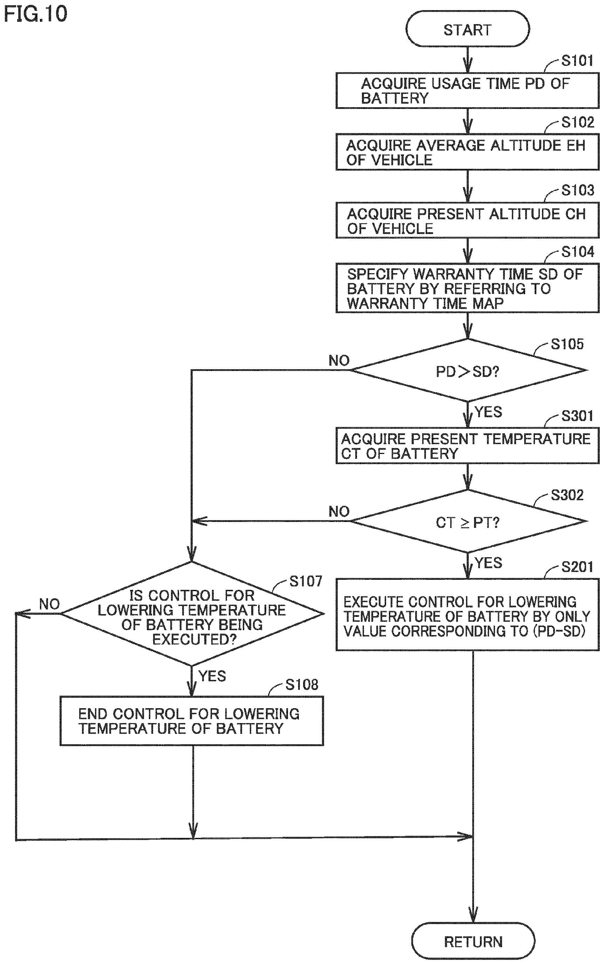

Fig. 10 is a flow chart representing procedures of battery control of secondary battery system 2 of Modified Example 3 of Embodiment 1. The flow chart of Fig. 10 differs from the flow chart of Fig. 9 in that the flow chart of Fig. 10 includes step S201, instead of step S106.

In step S201, CPU 201 executes a control for lowering the temperature of battery 21 by only a temperature corresponding to (PD-SD). For example, CPU 201 may increase the number of rotations of the fan of cooling mechanism 23 by only an amount corresponding to (PD-SD), or may decrease the upper limit value of a charging current of battery 21 by only an amount corresponding to (PD-SD).

### [Second Embodiment]

In the present embodiment, memory 202 stores a maximum allowable temperature map of battery 21.

The maximum allowable temperature map of battery 21 determines a corresponding relationship between information related to an average of external atmospheric pressures of battery 21 based on a traveling history of the vehicle and information related to a present external atmospheric pressure of battery 21 based on a present position of the vehicle, and a maximum allowable temperature of battery 21 as a condition where battery 21 can be used only for a determined warranty time.

The maximum allowable temperature map of battery 21 is determined such that, when an average of external atmospheric pressures of battery 21 is identical, the maximum allowable temperature of battery 21 becomes lower as a present external atmospheric pressure of battery 21 increases, and is determined such that, when a present external atmospheric pressure of battery 21 is identical, the maximum allowable temperature of battery 21 becomes higher as an average of external atmospheric pressures of battery 21 increases.

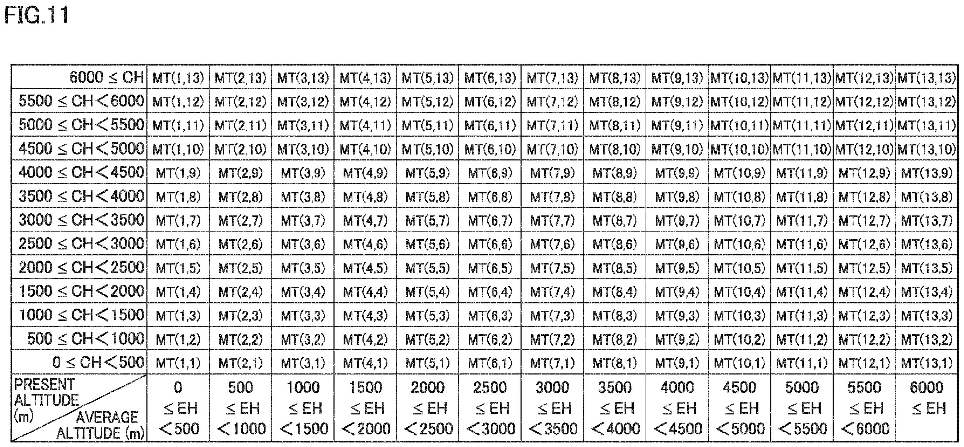

Fig. 11 is a figure representing an example of the maximum allowable temperature map of battery 21.

In the example of Fig. 11, information related to an average of external atmospheric pressures of the battery based on a traveling history of the vehicle is average altitude EH of the vehicle based on a traveling history of the vehicle. Information related to a present external atmospheric pressure of the battery based on a present position of the vehicle is present altitude CH of the vehicle. A maximum allowable temperature MT (i, j) of battery 21 is determined as a condition where battery 21 can be used only in a warranty time of 20 years, for example.

At the time when the temperature of battery 21 is maximum allowable temperature MT (i, j) or more, the internal pressure of battery 21 becomes the external atmospheric pressure of battery 21 or more, prior to the usage time of battery 21 reaching the warranty time of the battery. At identical average altitude EH, the higher present altitude CH, the lower maximum allowable temperature MT (i, j) of battery 21. At identical present altitude CH, the higher average altitude EH, the higher maximum allowable temperature MT (i, j) of battery 21.

CPU 201 acquires information related to an average of external atmospheric pressures of battery 21 (average altitude EH of the vehicle) from memory 202. CPU 201 acquires information related to a present external atmospheric pressure of battery 21 (present altitude CH of the vehicle) from sensor 99. CPU 201 acquires a present temperature of battery 21 from temperature sensor 223.

CPU 201 specifies maximum allowable temperature MT (i, j) of battery 21 corresponding to the acquired information related to an average of external atmospheric pressures of battery 21 (average altitude EH of the vehicle) and information related to a present external atmospheric pressure of battery 21 (present altitude CH of the vehicle), by referring to the maximum allowable temperature map of battery 21. CPU 201 controls the temperature of battery 21, based on the present temperature of battery 21 and maximum allowable temperature MT (i, j) of battery 21. In the case where the present temperature of battery 21 exceeds maximum allowable temperature MT (i, j) of battery 21, CPU 201 lowers the temperature of battery 21 to maximum allowable temperature MT (i, j) of battery 21 or less. Specifically, CPU 201 lowers the temperature of battery 21, by increasing the number of rotations of the fan within cooling mechanism 23. Or, CPU 201 lowers the temperature of battery 21, by decreasing the size of an input current to battery 21 or the size of an output current from battery 21. CPU 201 may lower the temperature of battery 21, by decreasing an upper limit value of an input current to battery 21 or an upper limit value of an output current from battery 21.

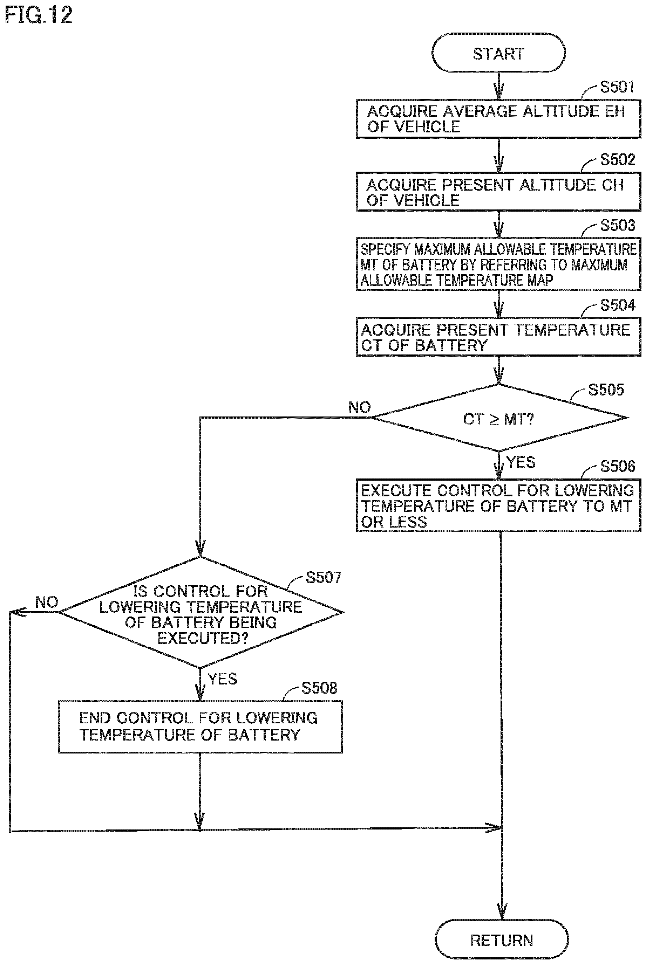

Fig. 12 is a flow chart representing procedures of battery control of secondary battery system 2 of Embodiment 2.

In step S501, CPU 201 acquires average altitude EH in a traveling history of the vehicle from memory 202.

In step S502, CPU 201 acquires present altitude CH of the vehicle from sensor 99.

In step S503, CPU 201 specifies maximum allowable temperature MT of battery 21 corresponding to acquired average altitude EH of the vehicle and present altitude CH of the vehicle, by referring to the maximum allowable temperature map shown in Fig. 11.

In step S504, CPU 201 acquires present temperature CT of battery 21 from temperature sensor 223.

In step S505, in the case where present temperature CT of battery 21 is maximum allowable temperature MT of battery 21 or more, the process proceeds to step S506.

In step S506, CPU 201 executes a control for lowering the temperature of battery 21 to MT or less. For example, CPU 201 increases the number of rotations of the fan of cooling mechanism 23, or decreases the size of an input current to battery 21 or the size of an output current from battery 21. Afterwards, the process ends.

In step S507, in the case where a control for lowering the temperature of battery 21 is being executed, the process proceeds to step S508, and in the case where a control for lowering the temperature of battery 21 is not being executed, the process ends.

In step S508, CPU 201 ends a control for lowering the temperature of battery 21. Afterwards, the process ends.

Although the embodiments of the present disclosure have been described, the embodiments disclosed this time should be considered as illustrative in all aspects and not limiting. The scope of the present disclosure is indicated by the claims and it is intended that all changes within the meaning and the scope equivalent to the claims are included.

## Claims

1. A secondary battery system (2) of a vehicle, comprising:
a battery (21) in which a function is maintained by a differential pressure between an internal pressure and an external atmospheric pressure; and
a processor (201) that controls a temperature of the battery (21) based on information related to an average of external atmospheric pressures of the battery (21) based on a traveling history of the vehicle, and information related to a present external atmospheric pressure of the battery (21) based on a present position of the vehicle.

2. The secondary battery system (2) of a vehicle according to claim 1, comprising:
a memory (202) that stores information determining a correspondence relationship between information related to an average of external atmospheric pressures of the battery (21) based on a traveling history of the vehicle and information related to a present external atmospheric pressure of the battery (21) based on a present position of the vehicle, and a warranty time of the battery (21), wherein
the processor (201) acquires information related to an average of external atmospheric pressures of the battery (21), information related to a present external atmospheric pressure of the battery (21), and a usage time of the battery (21), and
the processor (201) specifies the warranty time of the battery (21) corresponding to acquired information related to an average of external atmospheric pressures of the battery (21) and information related to a present external atmospheric pressure of the battery (21) by referring to the information determining the correspondence relationship, and controls the temperature of the battery (21) based on the usage time of the battery (21) and the warranty time of the battery (21).

3. The secondary battery system (2) of a vehicle according to claim 2, wherein
in a case where the usage time of the battery (21) exceeds the warranty time of the battery (21), the processor (201) lowers the temperature of the battery (21).

4. The secondary battery system (2) of a vehicle according to claim 3, wherein
in a case where the usage time of the battery (21) exceeds the warranty time of the battery (21), the processor (201) lowers the temperature of the battery (21) by only a temperature corresponding to a difference between the usage time of the battery (21) and the warranty time of the battery (21).

5. The secondary battery system (2) of a vehicle according to claim 2, wherein
in a case where the usage time of the battery (21) exceeds the warranty time of the battery (21) and the temperature of the battery (21) is a predetermined temperature or more, the processor (201) lowers the temperature of the battery (21).

6. The secondary battery system (2) of a vehicle according to claim 5, wherein
in a case where the usage time of the battery (21) exceeds the warranty time of the battery (21) and the temperature of the battery (21) is a predetermined temperature or more, the processor (201) lowers the temperature of the battery (21) by only a temperature corresponding to a difference between the usage time of the battery (21) and the warranty time of the battery (21).

7. The secondary battery system (2) of a vehicle according to claim 2, wherein
the information determining the correspondence relationship is determined such that, when an average of external atmospheric pressures of the battery (21) is identical, the warranty time of the battery (21) becomes shorter as a present external atmospheric pressure of the battery (21) increases, and is determined such that, when a present external atmospheric pressure of the battery (21) is identical, the warranty time of the battery (21) becomes longer as an average of external atmospheric pressures of the battery (21) increases.

8. The secondary battery system (2) of a vehicle according to claim 1, comprising:
a memory (202) that stores information determining a correspondence relationship between information related to an average of external atmospheric pressures of the battery (21) based on a traveling history of the vehicle and information related to a present external atmospheric pressure of the battery (21) based on a present position of the vehicle, and a maximum allowable temperature of the battery (21) as a condition where the battery (21) can be used only for a determined warranty time, wherein
the processor (201) acquires information related to an average of external atmospheric pressures of the battery (21), information related to a present external atmospheric pressure of the battery (21), and a present temperature of the battery (21), and
the processor (201) specifies a maximum allowable temperature of the battery (21) corresponding to acquired information related to an average of external atmospheric pressures of the battery (21) and information related to a present external atmospheric pressure of the battery (21) by referring to the information determining the correspondence relationship, and controls the temperature of the battery (21) based on the present temperature of the battery (21) and the maximum allowable temperature of the battery (21).

9. The secondary battery system (2) of a vehicle according to claim 8, wherein
in a case where the present temperature of the battery (21) exceeds the maximum allowable temperature of the battery (21), the processor (201) lowers the temperature of the battery (21) to the maximum allowable temperature of the battery (21) or less.

10. The secondary battery system (2) of a vehicle according to claim 8, wherein
the information determining the correspondence relationship is determined such that, when an average of external atmospheric pressures of the battery (21) is identical, the maximum allowable temperature of the battery (21) becomes lower as a present external atmospheric pressure of the battery (21) increases, and is determined such that, when a present external atmospheric pressure of the battery (21) is identical, the maximum allowable temperature of the battery (21) becomes higher as an average of external atmospheric pressures of the battery (21) increases.

11. The secondary battery system (2) of a vehicle according to claim 1, the secondary battery system (2) of a vehicle further comprising:
a cooling mechanism (23) that cools the battery (21), wherein
the processor (201) controls the temperature of the battery (21) by controlling the cooling mechanism (23).

12. The secondary battery system (2) of a vehicle according to claim 1,
wherein
the processor (201) controls the temperature of the battery (21) by controlling a current input to the battery (21) or a current output from the battery (21).

13. The secondary battery system (2) of a vehicle according to claim 1,
wherein
the battery (21) has a structure in which a space inside the battery (21) is held by deforming in accordance with a differential pressure between an internal pressure and an external atmospheric pressure.
